# EUROPEAN PATENT APPLICATION

(11) **EP 2 328 379 A1**
(43) Date of publication of application: **01.06.2011**
(21) Application number: 10187561.5
(22) Date of filing: 14.10.2010
(51) Int. Cl.: H04W 72/04

(54) **Communication system for performing random access using relay**

(30) Priority: 30.11.2009 KR 20090116555
(71) Applicant: Electronics and Telecommunications Research Institute, Daejeon 305-700 (KR)
(72) Inventor: Lim, Soon Yong, Daejeon-si 305-333 (KR); Park, Aesoon, Daejeon-si 305-333 (KR)
(74) Representative: Betten & Resch

(57) **Abstract**

Provided is a communication system for performing a random access using a relay. The relay may receive a preamble from a terminal, and may directly transmit, to the terminal, a response with respect to the received preamble. A portion of radio resources assigned to a base station may be assigned to the relay. The relay may process a random access request received from the terminal using the radio resource assigned to the relay. Since the relay processes the random access request received from the terminal, a time delay may decrease a success probability of the random access may increase.

## Description

### CROSS-REFERENCE TO RELATED APPLICATION

This application claims the benefit of Korean Patent Application No, 10-2009-0116555, filed on November 30, 2009, in the Korean Intellectual Property Office, the disclosure of which is incorporated herein by reference.

### BACKGROUND

### 1. Field of the Invention

Embodiments of the present invention relate to a random access technology.

### 2. Description of the Related Art

In a radio communication system, a terminal may perform a random access procedure to access a system.

During the random access procedure, the terminal may communicate with a base station using a common radio resource. When a plurality of terminals desires to communicate with the base station, a collision may occur between a message transmitted from a particular base station and a message transmitted from another terminal.

Accordingly, the random access procedure may include a contention resolution procedure of identifying a terminal. The random access procedure may consume a great amount of time during a period of time from a start of an access to a verification of a contention resolution. This may be a main performance deterioration factor. Most radio communication systems include a required performance that a random access should be performed within a predetermined period of time.

In a radio communication system, a relay may be utilized to expand a cell coverage. The relay may also be utilized to process a temporary traffic increase and the like.

When a random access message is transmitted to a base station via a relay, a required performance of a communication system may not be satisfied due to a retransmission delay of the relay.

### SUMMARY

An aspect of the present invention provides a communication system for performing a random access using a relay that may enhance a random access success rate of a terminal.

According to an aspect of the present invention, there is provided a a relay including: a radio resource reservation unit to receive, from a base station, an access radio resource among radio resources assigned to the base station; a transmitter to transmit information associated with the access radio resource to a terminal; and a receiver to receive a preamble from the terminal using the access radio resource.

According to another aspect of the present invention, there is provided a base station including: a receiver to receive a resource reservation request from a relay; and a radio resource decision unit to determine an access radio resource among radio resources assigned to the base station. The receiver may receive, from the relay, a upper layer connection request message that is transmitted from the terminal to the relay using the access radio resource.

According to still another aspect of the present invention, there is provided a relay including: a receiver to receive, from a base station, information associated with an access radio resource included in radio resources assigned to the base station; and a transmitter to transmit information associated with the access radio resource to a terminal. The receiver may receive an upper layer connection request message from the terminal using the access radio resource.

According to embodiments of the present invention, it is possible to enhance a random access success rate of a terminal in a communication system using a relay.

Also, according to embodiments of the present invention, it is possible to decrease a time delay occurring while a terminal performs a random access.

Additional aspects, features, and/or advantages of the invention will be set forth in part in the description which follows and, in part, will be apparent from the description, or may be learned by practice of the invention.

### BRIEF DESCRIPTION OF THE DRAWINGS

These and/or other aspects, features, and advantages of the invention will become apparent and more readily appreciated from the following description of exemplary embodiments, taken in conjunction with the accompanying drawings of which:
FIG. 1 is a flowchart illustrating a conventional random access procedure;
FIG. 2 is a flowchart illustrating a random access procedure when a relay is applied to the conventional random access procedure;
FIG. 3 is a flowchart illustrating a random access procedure according to an embodiment of the present invention;
FIG. 4 is a block diagram illustrating a configuration of a relay according to an embodiment of the present invention;
FIG 5 is a block diagram illustrating a configuration of a base station according to an embodiment of the present invention; and
FIG. 6 is a block diagram illustrating a configuration of a relay according to another embodiment of the present invention.

### DETAILED DESCRIPTION

Reference will now be made in detail to exemplary embodiments of the present invention, examples of which are illustrated in the accompanying drawings, wherein like reference numerals refer to the like elements throughout. Exemplary embodiments are described below to explain the present invention by referring to the figures.

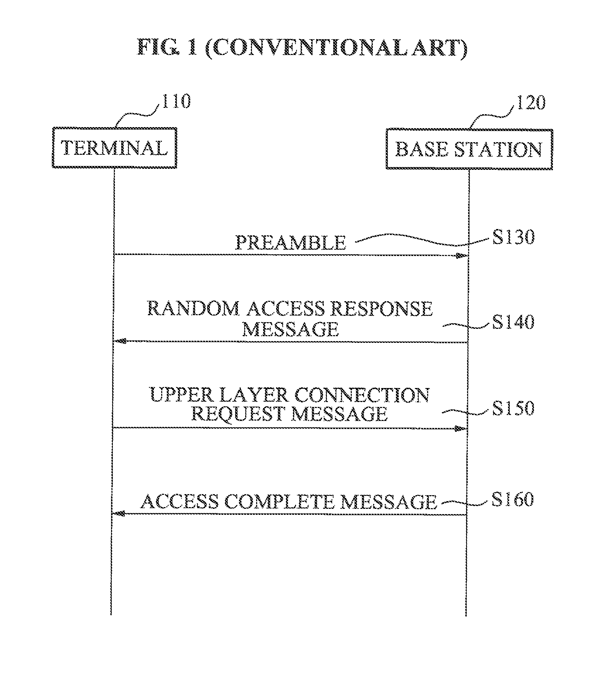

FIG. 1 is a flowchart illustrating a conventional random access procedure.

A portion of radio resources available in a communication system may be assigned to a base station 120. Hereinafter, the radio resource assigned to the base station 120 is referred to as a base station radio resource. The base station 120 may receive data from a terminal 110 connected to the base station 120, or may transmit data to the terminal 120 using the base station radio resource. The base station 120 may receive a preamble and an upper layer connection request message from the terminal 110 using the base station radio resource. The base station 120 may transmit a random access response message or an access complete message to the terminal 110 using the base station radio resource.

In operation S130, the terminal 110 may transmit a preamble to the base station 120. The terminal 110 may receive, from the base station 120, information associated with a radio resource utilized to transmit the preamble, and may transmit the preamble using the radio resource. The radio resource may include at least one of a time slot, a frequency band, and a spread code that may be utilized by the base station 120.

For example, the terminal 110 may perform synchronization with the base station 120 using a reference signal received from the base station 120. The terminal 110 may receive, from the base station 120, information associated with a time when it is possible to transmit the preamble, and may transmit the preamble to the base station 120 in a particular time slot or at a particular point in time.

Information associated with the radio resource utilized to transmit the preamble may be transmitted to all terminals included in a coverage of the base station 120. Accordingly, when one or more terminals desire to randomly access the base station 120, each terminal may transmit a preamble using the same radio resource. In this case, a collision may occur in the preambles transmitted by the terminals.

When the base station 120 receives the preamble from the terminal 110 in operation S130, the base station 120 may transmit a random access response message to the terminal 110 in response to the received preamble in operation S140.

The random access response message may include the preamble received from the terminal 110. The terminal 110 may receive the random access response message and compare the preamble, included in the random access response message, with the preamble transmitted in operation S130. When the preamble included in the random access response message is identical to the preamble transmitted in operation S130, the terminal 110 may determine the preamble transmitted in operation S130 is successfully received by the base station 120.

The random access response message may include a temporary identifier and information associated with a radio resource assigned to each terminal.

In operation S150, the terminal 110 may transmit an upper layer connection request message to the base station 120. The terminal 110 may transmit the upper layer connection request message using the radio resource assigned to the terminal 110, included in the random access message.

The upper layer connection request message may correspond to a Radio Resource Control (RRC) Connection Request message.

The base station 120 may perform a random access procedure based on the upper layer connection request message.

In operation S160, the base station 120 may transmit an access complete message to the terminal 110. The terminal 110 may receive the access complete message to verify that the random access procedure is successfully completed, When the random access procedure is successfully completed, the terminal 110 may transmit data to the base station 120.

When the random access procedure is successfully completed, the terminal 110 may convert the temporary identifier received from the base station 120 to a general identifier, and transmit data to the base station based on the general identifier.

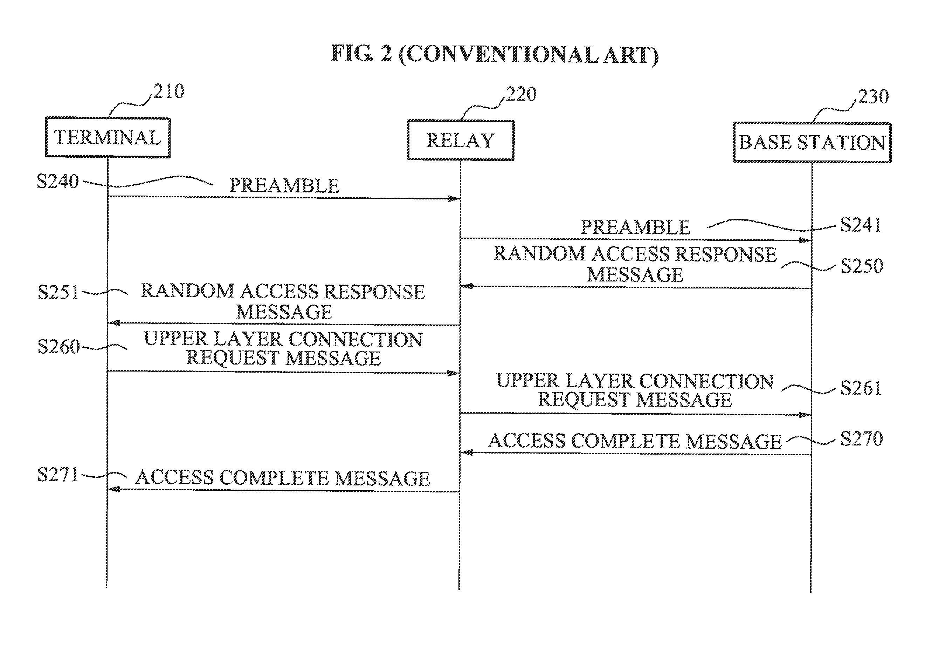

FIG. 2 is a flowchart illustrating a random access procedure when a relay 220 is applied to the conventional random access procedure.

In operation S240, a terminal 210 may transmit a preamble to the relay 220.

In operation S241, the relay 220 may forward the received preamble to a base station 230. The relay 220 may demodulate a high frequency band of a preamble to generate a baseband of a preamble signal. The relay 220 may modulate the baseband of the preamble signal to generate a high frequency band of a preamble signal, and may transmit the generated high frequency band of the preamble signal to the base station 230.

A predetermined amount of time may be utilized for the relay 220 to demodulate and modulate the preamble. Accordingly, when the preamble is transmitted via the relay 220, a delay may occur compared to a case where the preamble is transmitted without using the relay 220.

In operation S250, the base station 230 may transmit a random access response message to the relay 220 in response to the received preamble.

In operation S251, the relay 220 may forward, to the terminal 210, the random access response message received from the base station 230. Similarly to a case where the relay 220 transmits the preamble to the base station 230, a predetermined amount of time may be utilized to transmit the random access response message for the relay 220 to the terminal 210.

Comparing the example of FIG. 2 with a case where the terminal 210 directly transmits the preamble to the base station 230 and also directly receives the random access response message from the base station 230, a delay may occur twice in the relay 220.

When the terminal 210 receives the random access response message from the relay 220 within a predetermined period of time from a point in time when the terminal 210 transmits the preamble to the relay 220, the terminal 210 may determine the preamble is successfully received by the base station 230 .

Conversely, when the terminal 210 does not receive the random access response message from the relay 220 within a predetermined period of time from a point in time when the terminal 210 transmits the preamble to the relay 220, the terminal 210 may determine the preamble is not successfully received by the base station 230. In this case, the terminal 210 may retransmit the preamble to the base station 230 via the relay 220.

When the terminal 210 determines the preamble is successfully received by the base station 230, the terminal 210 may transmit an upper layer connection request message to the relay 220 in operation 260.

In operation S261, the relay 220 may forward the upper layer connection request message to the base station 230. A delay may occur while the upper layer connection request message is transmitted via the relay 230. The base station 230 may perform a random access procedure using the upper layer connection request message.

In operation S270, the base station 230 may transmit an access complete message to the relay 220 in response to the upper layer connection request message.

In operation S271, the relay 220 may transmit the access complete message to the terminal 210. A delay may also occur while the access complete message is transmitted via the relay 220.

When the terminal 210 receives the access complete message from the relay 220 within a predetermined period of time from a point in time when the terminal 210 transmits the upper layer connection request message to the relay 220, the terminal 210 may determine the preamble is successfully received by the base station 230 and the random access procedure is a success.

When the terminal determines the random access procedure is a failure, the terminal 210 may return to operation S240 to retransmit the preamble to the relay 220.

Whether the random access procedure is a success or a failure, that is, whether the terminal 210 needs to retransmit the preamble may be determined depending on whether a response is received from the base station 230 within a predetermined period of time. When the communication system includes the relay 220, a success probability of the random access procedure may decrease due to a delay caused by the relay 220.

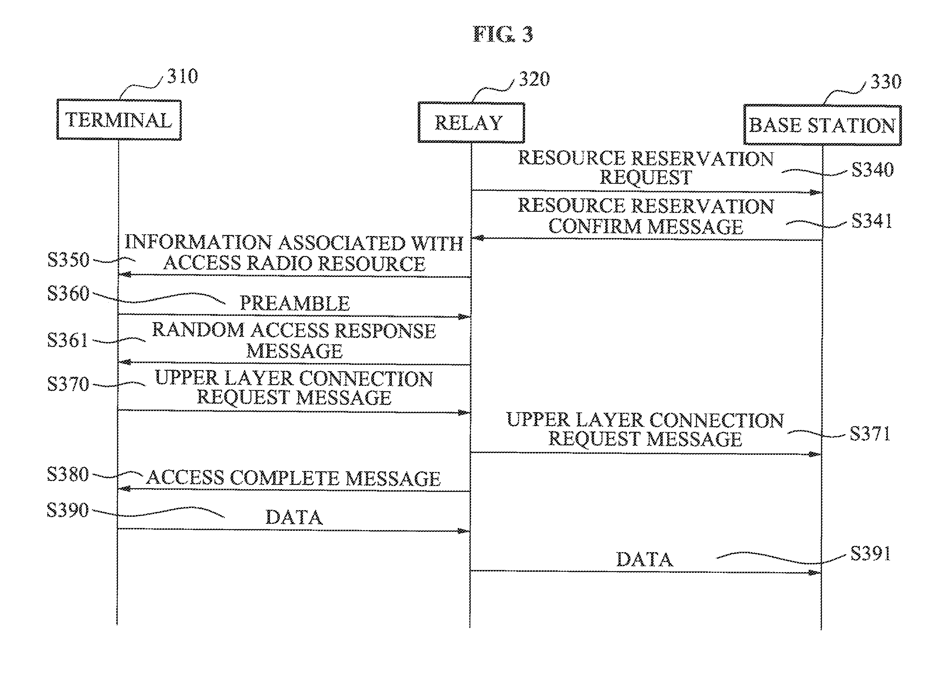

FIG. 3 is a flowchart illustrating a random access procedure according to an embodiment of the present invention.

A portion of radio resources available in a communication system may be assigned to a base station 330. Hereinafter, the radio resource assigned to the base station 330 may be referred to as a base station radio resource.

In operation S340, a relay 320 may transmit a resource reservation request to the base station 330. The resource reservation request may include information associated with base station radio resources assigned to the base station 330.

The base station 330 may assign a portion of base station radio resources to the relay 320 based on the resource reservation request. Hereinafter, a radio resource assigned from the base station 330 to the relay 320 is referred to as an access radio resource. The access radio resource may be included in the base station radio resource.

In operation S341, the base station 330 may transmit a resource reservation confirm message to the relay 320. The resource reservation confirm message may include information associated with the access radio resource assigned to the relay 320.

In operation S350, the relay 320 may transmit information associated with the access radio resource to a terminal 310. The access radio resource may be classified into a radio resource utilized to receive a preamble signal, and a radio resource utilized to receive an upper layer connection request message. Information associated with the access radio resource, transmitted from the relay 320, may include only information associated with the radio resource utilized to receive the preamble signal.

In operation S360, the terminal 310 may transmit a preamble to the relay 320 using the access radio resource. The relay 320 may receive the preamble using the radio resource utilized to receive the preamble signal.

In operation S361, the relay 320 may transmit a random access response message to the terminal 310 in response to the preamble signal. The relay 320 may assign a portion of access radio resources to the terminal 310 transmitting the preamble signal. Hereinafter, a radio resource assigned to the terminal 310 transmitting the preamble signal is referred to as a terminal radio resource. The random access response message may include information associated with the terminal radio resource.

The random access response message may include a temporary identifier. When the present invention is applied to a 3GPP LTE system, the temporary identifier may correspond to Temp C-RNTI.

Since the relay 320 directly transmits the random access response message to the terminal 310 in response to the preamble instead of forwarding the preamble to the base station 310, a delay may not occur.

In operation S370, the terminal 310 may transmit an upper layer connection request message to the relay 320. The terminal 310 may transmit the upper layer connection request message to the relay 320 using the terminal radio resource.

In operation S371, the relay 320 may forward the received upper layer connection request message to the base station 330. The base station 330 may perform the random access procedure using the upper layer connection request message.

In operation S380, the relay 320 may transmit an access complete message to the terminal 310.

When the random access procedure is successfully completed, the terminal 310 may determine the temporary identifier as an identifier of the terminal 310. In operation S390, the terminal 310 may transmit data to the relay 320 using the determined identifier of the terminal 310. In operation S391, the relay 320 may forward the data to the base station 330.

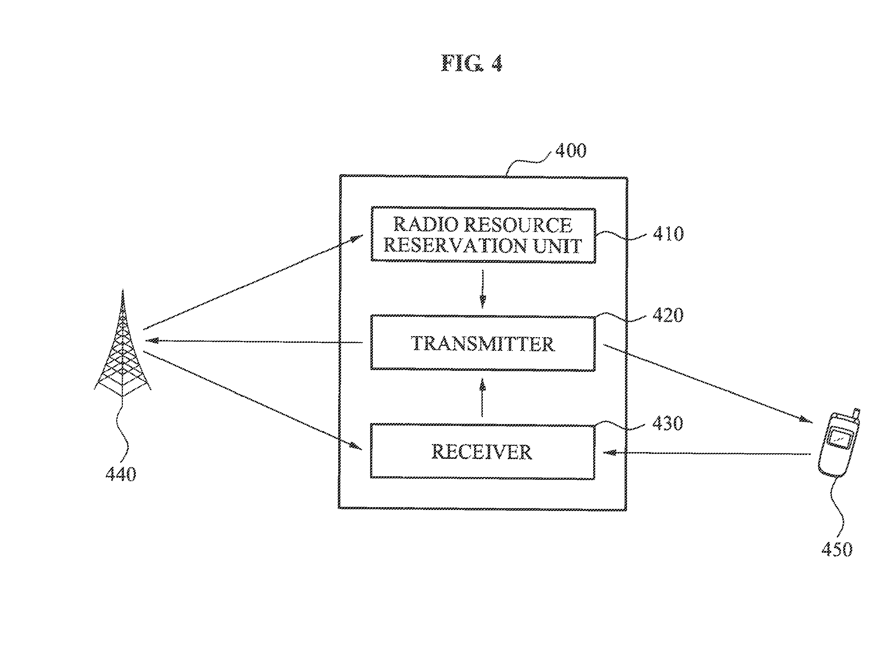

FIG. 4 is a block diagram illustrating a configuration of a relay 400 according to an embodiment of the present invention. The relay 400 may include a radio resource reservation unit 410, a transmitter 420, and a receiver 430.

The radio resource reservation unit 410 may receive, from a base station 440, an access radio resource among radio resources assigned to the base station 440. The radio resources may include at least one of a time slot, a frequency band, and a spread code that are assigned to the base station 440.

The transmitter 420 may transmit, to the base station 440, a resource reservation request with respect to the access radio resource. The base station 440 may determine the access radio resource among the radio resources assigned to the base station 440, and may include information associated with the determined access radio resource in a resource reservation confirm message, and transmit the resource reservation confirm message to the relay 400.

The transmitter 420 may periodically transmit the resource reservation request to the base station 440.

The receiver 430 may receive the resource reservation confirm message from the base station 440 in response to the resource reservation request. The resource reservation confirm message may include information associated with the access radio resource.

The transmitter 420 may transmit information associated with the access radio resource to a terminal 450.

The terminal 450 may transmit a preamble to the relay 400 using the access radio resource. The receiver 430 may receive the preamble from the terminal 450 using the access radio resource.

The transmitter 420 may transmit the random access response message to the terminal 450 in response to the preamble. The random access response message may include a temporary identifier of the terminal 450.

In response to the random access response message, the receiver 450 may receive an upper layer connection request message from the terminal 450. The transmitter 420 may forward the upper layer connection request message to the base station 440.

The random access response message may include information associated with the radio resource assigned to the terminal 450. The terminal 450 may transmit the upper layer connection request message to the base station 440 using the assigned radio resource.

The transmitter 420 may transmit, to the terminal 450, an access complete message indicating that the random access procedure is completed.

When the random access procedure is completed, the terminal 450 may transmit data to the base station 440. The terminal 450 may determine the temporary identifier, as an identifier of the terminal 450, and may transmit the data to the relay 400 using the determined identifier of the terminal 450. The relay 400 may forward the received data to the base station 440.

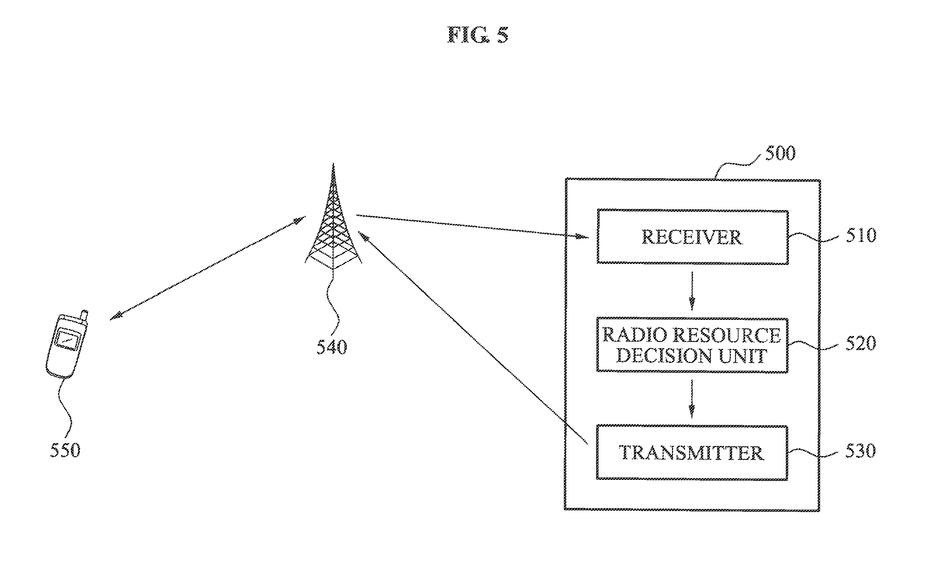

FIG 5 is a block diagram illustrating a configuration of a base station 500 according to an embodiment of the present invention. The base station 500 may include a receiver 5 10, a radio resource decision unit 520, and a transmitter 530.

The receiver 510 may receive a resource reservation request from a relay 540. The resource reservation request denotes a request to utilize a portion of radio resources assigned to the base station 500. The radio resources may include at least one of a time slot, a frequency band, and a spread code.

The receiver 510 may periodically receive the resource reservation request from the relay 540.

The radio resource decision unit 520 may determine the access radio resource among the radio resources assigned to the base station 500. The access radio resource denotes a portion of radio resources assigned to the base station 500, and may be utilized for the relay 540 to perform a random access procedure.

The transmitter 530 may transmit, to the relay 540 in response to the resource reservation request, a resource reservation confirm message with respect to the access radio resource.

According to an embodiment, the base station 500 may not perform the random access procedure using the access radio resource, and only the relay 540 may perform the random access procedure using the access radio resource.

According to another embodiment, the base station 500 may also perform the random access procedure using the access radio resource. The base station 500 may perform the random access procedure with respect to a terminal adjacent to the base station 500 using the access radio resource. The relay 540 may perform the random access procedure with respect to a terminal adjacent to the relay 540 using the access radio resource.

The base station 500 and the relay 540 employ the same radio resource, however, are physically separated from each other. Accordingly, a collision probability may be significantly small.

The relay 540 may perform the random access procedure with respect to a terminal 550 using the access radio resource. The relay 540 may receive an upper layer connection request message from the terminal 550 using the access radio resource, and forward the received upper layer connection request message to the base station 500.

The receiver 510 may receive, from the relay 540, the upper layer connection request message that is transmitted from the terminal 550 to the relay 540, and perform the random access procedure.

When the random access procedure is completed, the terminal 550 may determine a temporary identifier as an identifier of the terminal 550. The terminal 550 may transmit data to the relay 540 using the determined identifier of the terminal 550. The relay 540 may forward the received data to the base station 500.

The radio resource decision unit 520 may determine a data transmission radio resource among radio resources undetermined as the access radio resource. Te transmitter 530 may transmit information associated with the data transmission radio resource to the relay 540. The relay 540 may receive data from the terminal 550 using the data transmission radio resource. The receiver 510 may receive the data that is transmitted from the terminal 550 to the relay 540.

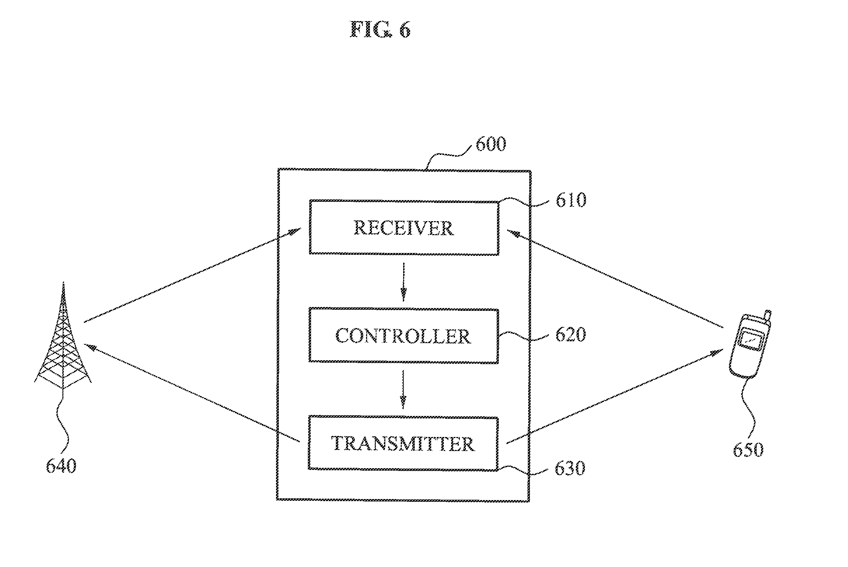

FIG. 6 is a block diagram illustrating a configuration of a relay 600 according to another embodiment of the present invention. The relay 600 may include a receiver 610, a controller 620, and a transmitter 630.

The transmitter 630 may transmit, to a base station 640, a resource reservation request with respect to an access radio resource among radio resources assigned to the base station 640. The access radio resource denotes a portion of radio resources assigned to the base station 640, and may be utilized for the relay 600 to perform a random access procedure. The radio resources may include at least one of a time slot, a frequency band, and a spread code.

The receiver 610 may receive, from the base station 640 in response to the resource reservation request, information associated with the access radio resource.

The receiver 610 may receive a preamble from a terminal 650 using the access radio resource. The controller 620 may determine whether a radio resource assignable to the terminal 650 exists among the access radio resource. The controller 620 may assign the assignable radio resource to the terminal 650 as a terminal radio resource. The transmitter 630 may transmit, to the terminal 650 in response to the preamble, information associated with the terminal radio resource. The receiver 610 may receive an upper layer connection request message from the terminal 650 using the terminal radio resource.

The controller 620 may assign a temporary identifier to the terminal 650. The temporary identifier may be included in a random access response message with respect to the preamble and thereby be transmitted. When the random access procedure is completed, the terminal 650 may determine the temporary identifier as an identifier of the terminal 650. The terminal 650 may transmit data to the relay 600 using the determined identifier of the terminal 650. The receiver 630 may receive, from the terminal 650, data that is transmitted using the identifier of the terminal 650.

Although a few exemplary embodiments of the present invention have been shown and described, the present invention is not limited to the described exemplary embodiments. Instead, it would be appreciated by those skilled in the art that changes may be made to these exemplary embodiments without departing from the principles and spirit of the invention, the scope of which is defined by the claims and their equivalents.

## Claims

1. A relay comprising:
a radio resource reservation unit to receive, from a base station, an access radio resource among radio resources assigned to the base station;
a transmitter to transmit information associated with the access radio resource to a terminal; and
a receiver to receive a preamble from the terminal using the access radio resource.

2. The relay of claim 1, wherein the radio resources include at least one of a time slot, a frequency band, and a spread code.

3. The relay of claim 1 or 2, wherein:
the transmitter transmits, to the base station, a resource reservation request with respect to the access radio resource, and
the receiver receives, from the base station in response to the resource reservation request, a resource reservation confirm message with respect to the access radio resource.

4. The relay of claim 1, 2, or 3 wherein the transmitter transmits, to the terminal in response to the preamble, a random access response message including an identifier.

5. The relay of claim 4, wherein:
the receiver receives a upper layer connection request message from the terminal in response to the random access response message, and
the transmitter forwards the upper layer connection request to the base station.

6. The relay of claim 5, wherein the random access response message includes information associated with a radio resource utilized to receive the upper layer connection request message.

7. A base station comprising:
a receiver to receive a resource reservation request from a relay; and
a radio resource decision unit to determine an access radio resource among radio resources assigned to the base station,
wherein the receiver receives, from the relay, a upper layer connection request message that is transmitted from the terminal to the relay using the access radio resource.

8. The base station of claim 7, further comprising:
a transmitter to transmit, to the relay in response to the resource reservation request, a resource reservation confirm message with respect to the access radio resource.

9. The base station of claim 7 or 8, wherein the upper layer connection request message is transmitted based on an identifier transmitted from the relay to the terminal.

10. The base station of claim 7, 8, or 9wherein:
the radio resource decision unit determines a data transmission radio resource among radio resources undetermined as the access radio resource, and
the receiver receives data that is transmitted from the terminal to the relay using the data transmission radio resource.

11. A relay comprising:
a receiver to receive, from a base station, information associated with an access radio resource included in radio resources assigned to the base station; and
a transmitter to transmit information associated with the access radio resource to a terminal,
wherein the receiver receives an upper layer connection request message from the terminal using the access radio resource.

12. The relay of claim 11, further comprising:
a controller,
wherein the receiver receives a preamble from the terminal, the controller assigns a terminal radio resource to the terminal among the access radio resource, and the transmitter transmits information associated with the terminal radio resource in response to the preamble.

13. The relay of claim 12, wherein the receiver receives the upper layer connection request message using the terminal radio resource.

14. The relay of claim 12 or 13, wherein:
the controller assigns an identifier to the terminal,
the transmitter transmits the identifier to the terminal, and
the receiver receives data from the terminal based on the identifier.

15. The relay of claim 11, 12, or 13 wherein:
the transmitter transmits, to the base station, a resource reservation request with respect to the access radio resource, and
the receiver receives, from the base station in response to the resource reservation request, information associated with the access radio resource.
